# EUROPEAN PATENT APPLICATION

(11) **EP 4 786 814 A1**
(43) Date of publication of application: **05.08.2026**
(21) Application number: 25155797.1
(22) Date of filing: 04.02.2025
(51) Int. Cl.: F16D 35/00, F16D 57/00, F16D 57/02, B65H 75/44

(54) **ROTARY VISCOUS BRAKE FOR A HOSE REEL**

(71) Applicant: CEJN AB, 541 25 Skövde (SE)
(72) Inventor: Åkesson, Filip, 541 25 Skövde (SE); Olsson, Johan, 541 25 Skövde (SE)
(74) Representative: Murgitroyd & Company

(57) **Abstract**

A rotary viscous brake for a hose reel (10), and a hose reel (10) with the same, is disclosed. The rotary viscous brake (50) comprises a first part (100) attachable to a housing (20) of the hose reel (10), a second part (200) attachable to a rotatable drum (30) for a hose on the hose reel (10), and a third part (300) for enclosing the second part (200) within the first part (100) and third part (300) together with a liquid (400). The first part (100) comprises a plurality of first fins (110) being circumferential and extending in an axial direction of the rotary viscous brake (50). The second part (200) comprises a plurality of second fins (210) being at least partly circumferential and extending in an opposite axial direction of the rotary viscous brake (50). The plurality of first fins (110) and second fins (210) are arranged such that they are interleaved with each other and immersed by the liquid (400) for providing a damping torque when the first part (100) and the second part (200) rotate relatively to each other. There are at least two second fins (210) next to each circumferential first fin (110); and a thickness (220) of each of the second fins (210) is gradually increased from a thinner end (212) to a thicker end (214).

## Description

### Technical Field

The present disclosure relates to a rotary viscous brake. Particularly, the present disclosure relates to a rotary viscous brake for a hose reel, and a hose reel with such a rotary viscous brake. More particularly, the present disclosure relates to how to provide a dampening torque when a hose is retracted onto a hose reel.

### Background

A hose reel is used for reeling in and out, to wind and unwind, a hose. The hose supplies fluid, for example air or liquid. The hose supplying the fluid is reeled on to the hose reel so that the hose is stored, kept safe, and is out of the way. The hose is reeled out as much as is needed and subsequently reeled in when the hose is not used. Some hose reels retract the hose more or less automatically. It is a problem how to control such a retraction, for example avoiding that the hose is retracted too fast and cause injuries to users, the hose, anything connected to the hose, and the hose reel. It is desirable to improve how to wind the hose, while also providing a good way to unwind the hose.

It is also desirable to provide a hose reel that is inexpensive to manufacture, is easy to manufacture and to assemble, and is robust. Any solution must not be complex or complicated. A reliable technical and well working solution is preferred. The present disclosure is directed to overcoming one or more of the problems as set forth above.

### Summary of the Invention

It is an object of the present invention to provide a rotary viscous brake for a hose reel, and a hose reel with such a rotary viscous brake. This object can be achieved by the features as defined by independent claims. Further enhancements are characterised by the dependent claims. The invention is defined by the claims.

According to one embodiment, a rotary viscous brake for a hose reel 10 is disclosed. The rotary viscous brake may also be known as a rotary damper or a rotary fluid brake. The rotary viscous brake 50 comprises a first part 100 attachable to a housing 20 of the hose reel 10, a second part 200 attachable to a rotatable drum 30 for a hose on the hose reel 10, and a third part 300 for enclosing the second part 200 within the first part 100 and third part 300 together with a liquid 400. The first part may be a housing, the second part may be a rotor, and the third part may be a lid. The liquid may be silicone oil. The first part 100 comprises a plurality of first fins 110 being circumferential and extending in an axial direction of the rotary viscous brake 50. The second part 200 comprises a plurality of second fins 210 being at least partly circumferential and extending in an opposite axial direction of the rotary viscous brake 50. The plurality of first fins 110 and second fins 210 are arranged such that they are interleaved with each other and immersed by the liquid 400 for providing a damping torque when the first part 100 and the second part 200 rotate relatively to each other.

There are at least two second fins 210 next to each circumferential first fin 110. The at least two second fins 210 next to each circumferential first fin 110 may be at least two second fins 210 on the same circumference of the second part 200. A thickness 220 of each of the second fins 210 is gradually increased from a thinner end 212 to a thicker end 214. The thickness 220 of each of the second fins 210 may be a gradual and constant increase from one thinner end 212 to the thicker other end 214. Preferably the increase is in the same rotational direction for all second fins 210, or at least for substantially all second fins 210. The second fins 210 may have correspondingly the same shape, except for their lengths along the circumference which is getting shorter the closer they are to the centre.

The rotary viscous brake may be configured such that the damping torque is higher when the second part 200 rotates leading with the thinner end 212, and the damping torque is lower when the second part 200 rotates leading with the thicker end 214, the rotation being relative to the first part 100. The rotary viscous brake for a hose reel 10, as defined by the claims, provide a difference of about 20 to 30 percent in the damping torque depending on which way the rotary viscous brake rotates. The range 20 to 30 percent depends on the viscosity of the liquid 400 and the rotational speed, for example rotations per minutes. The damping torque increases when the rotational speed increases. One or more embodiments herein provide a rotary viscous brake 50 for a hose reel 10 with a low damping torque when unwinding the hose 70 from the hose reel 10, and a higher damping torque when winding the hose 70 onto the hose reel 10. The rotary viscous brake 50 is suitable for a hose reel 10 to ensure that a retraction of the hose is done in a controlled manner, not too fast, and without causing injuries to users, the hose 70, and the hose reel 10. An advantage is that this can be achieved without the use of any gears, because gears need maintenance and have a limited lifetime. Another advantage is that the rotary viscous brake 50 may be arranged in direct contact with the rotating drum 30 of the hose reel 10 and the housing 20 of the house reel 10, such that no other parts, such as gears or couplings, are needed. This provides a reliable hose reel 10 with a long lifetime.

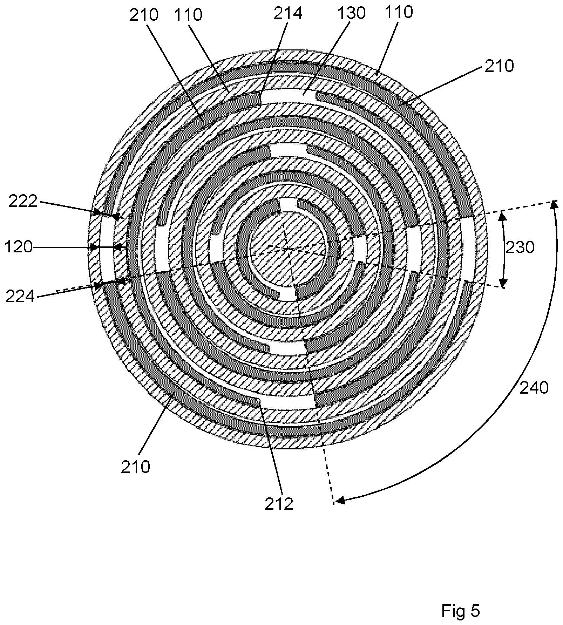

According to one embodiment, the thinner end 212 has a thickness 222 that is between 30 and 50 percent, preferably about 40 percent, of a thickness 224 of the thicker end 214. Each second fin 210 may have a thickness 222 of the thinner end 212 that is 40 percent of a thickness 224 of the thicker end 214. The thickness is measured as illustrated in figure 5, i.e. in the radial direction. The thickness of each second fin 210 may be constant in the axial direction of the rotary viscous brake 50.

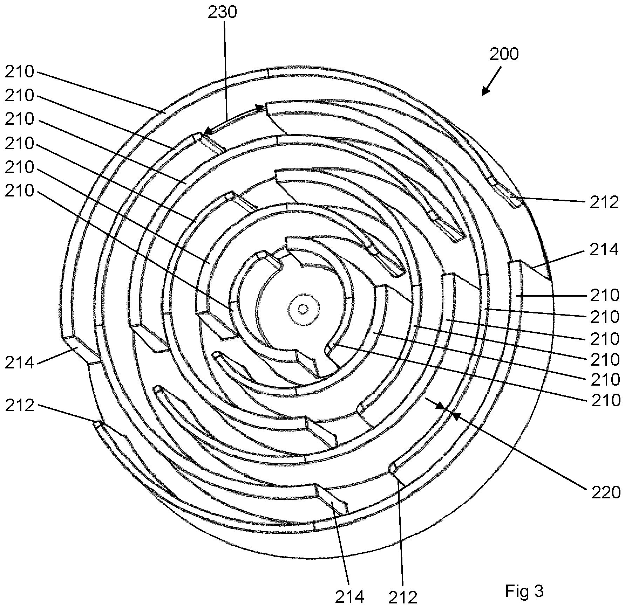

According to one embodiment, there may be a 10 to 30 degrees, preferably 20 degrees, opening 230 between the at least two second fins 210 next to each circumferential first fin 110. The opening 230 may be along the circumference, between the thinner end 212 and the thicker end 214 of two different second fins 210 next to each other on the same circumference. The opening 230 may exclude any form of a second fin 210, for example such that liquid 400 may pass freely through the opening 230. The opening 230 may extend all the way to the bottom of the second part 200, as illustrated in figure 3. On each circumference of second fins 210 there may be two fins 210 with two openings 230, a gap 230 for the liquid 400, between the two fins 210. The two fins 210 and the two opening 230 may form together 360 degrees along the same circumference. The size of the two fins 210 may be the same. The size of the two openings 230 may be the same. Each of the two fins 210 may extend along the circumference 170 to 150 degrees, preferably 160 degrees.

According to one embodiment, two sets of the second fins 210 may comprise an off-set 240 of the thicker ends 214 between each set by 90 degrees. Each set being along a different circumference. The two sets being next to each other in a radial direction with a circumferential first fin 100 in-between. Each set of the second fins 210 may comprise two fins 210 and two openings 230 occupying one circumference. The rotary viscous brake may comprise four to eight, preferably six, sets of the second fins 210 interleaved between five to nine, preferably seven, circumferential first fins 110, respectively.

According to one embodiment, the thickness 224 of the thicker end 214 is 80 to 90 percent, preferably 85 percent, of the groove width 120 between the two first fins 110 in which the thicker end 214 rotates. The thickest part, in the radial direction, of each second fin 210 may be 85 percent of the groove width 120. The width 120 of the groove 130 may be constant and the same for all grooves 130 between the first fins 110. The thickness and the width are measured in the radial direction of the rotary viscous brake 50.

According to one embodiment, the plurality of first fins 110 and second fins 210 are interleaved with each other in a radial direction with two second fins 210 on each circumference interleaved between two circumferential first fins 110. Every circumference of first fins 110 may have a circumferential first fin 110 and every circumference of second fins 210 may have two second fins 210. The two second fins 210 may be only two second fins 210, no more no less. However, the disclosure is not limited to only two fins 210, and the second fins 210 may be three or four second fins on the same circumference.

According to one embodiment, the plurality of first fins 110 and second fins 210 may be interleaved with each other in a radial direction with three or four second fins 210 on each circumference between two circumferential first fins 110.

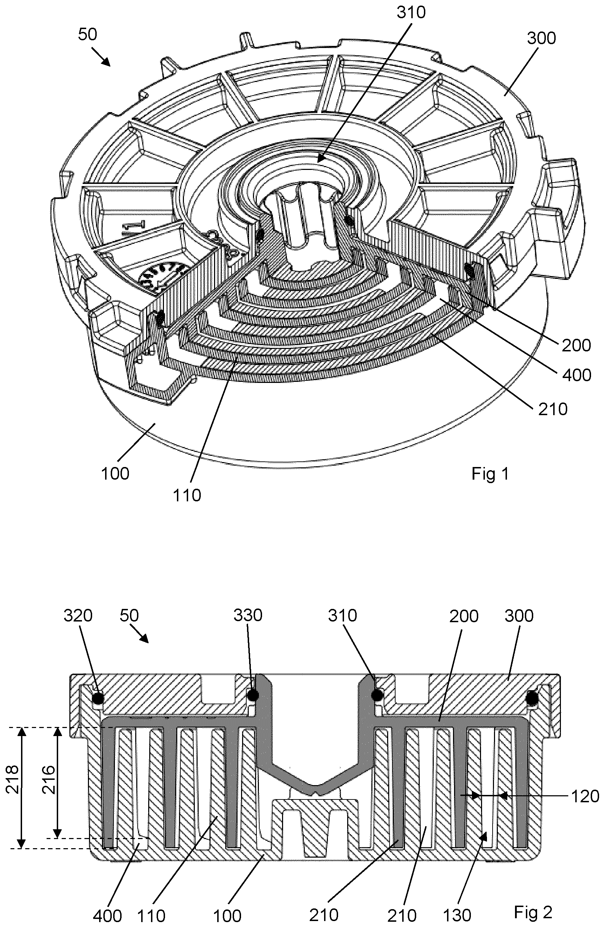

According to one embodiment, an axial extension 216 of each second fin 210 at the thinner end 212 may be less compared with an axial extension 218 of each second fin 210 at the thicker end 214. As best illustrated in figures 2 and 3, each second fin 210 may have an axial extension 218, a hight 218, that is constant from the thicker end 214 to at least half the second fin 210 along the circumference, and the remaining axial extension may be gradual and constant decreasing to a lowest axial extension 216 at the thinner end 212. A top corner at the thinner end 212 may be cut off, as best illustrated in figure 3.

According to one embodiment, the gradually increased from a thinner end 212 to a thicker end 214 on the second fins 210 may be formed by reducing a radius to the inside of the second fins 210 from the thinner end 212 to the thicker end 214, while keeping a radius to the outside of the second fins 210 constant between the thinner end 212 and the thicker end 214. The reduction of the radius may be constant and gradual.

According to one embodiment, the third part 300 may comprise an opening 310 arranged centrally to allow access to a central part of the second part 200. In this way an object may connect to the second part 200 of the rotary viscous brake 50 while another object may connect to the first part 100. This provides a damping torque between the two objects. For example, the first part 100 may be connected to a housing 20 of a hose reel 10, and the second part 200 may be connected to a rotatable drum 30 of the hose reel 10. The second part 200 may comprise protrusions that protrude into the opening 310, and/or openings, for connecting a part of a hose reel 10 to the second part 200 through the opening 310.

According to one embodiment, a hose reel 10 comprises the rotary viscous brake 50 according to any one of the embodiments disclosed herein. In such an embodiment, the first part 100 is attached to the housing 20 of the hose reel 10, and the second part 200 is attached to the rotatable drum 30 for a hose 70 on the hose reel 10. The drum 30 may rotate relative to the housing 20 and thereby wind and unwind the hose 70 on the drum 30. The attachments may be made directly, without the use of any gears or similar.

According to one embodiment, the rotary viscous brake 50 may be configured to rotate in both directions and providing different damping torque in the two directions. For example, the rotary viscous brake 50 may have a low damping torque when unwinding the hose 70 from the hose reel 10, and a higher damping torque when winding the hose 70 onto the hose reel 10. The difference in damping torque may be in the range 20 to 30 percent. The damping torque may be adjustable by changing the viscosity of the liquid 400. The rotational speed of the drum 30 relative to the housing 20 may vary and a higher rotational speed may provide a higher damping torque compared with a lower rotational speed. The rotary viscous brake may be connected without any gears, for example directly to relative rotating objects. The rotary viscous brake may be used as a rotational support for an axis of the rotatable drum 30 within the housing 20 of the hose reel 10.

According to one embodiment, the hose reel may comprise a spring 60 with a spring force constantly acting on the rotary viscous brake 50. Preferably the spring 60 is a torsion spring 60. The spring force may be used for winding up the hose 70 onto the hose reel 10. The rotary viscous brake 50 according to at least some embodiments disclosed herein ensure that it is easy for a user to pull out the hose 70 from the hose reel 10 by hand force. During such a pull out the spring 60 may be loaded with spring force used for subsequently retract the hose 70. When the spring 60 rotates the rotatable drum 30 to wind up the hose 70 onto the hose reel, the rotary viscous brake 50 according to embodiments herein ensures that the rotatable drum 30 doesn't rotate too fast so that the hose 70 could hurt the user or damage the environment. No further brake or safety needs to be used in the hose reel 10. The rotary viscous brake 50 may the only brake for the rotatable drum 30. The hose reel 10 may further comprise a stop for the hose 70 of the hose reel 10. The stop may act only on the hose 70, not on the rotatable drum 30.

According to one embodiment, the rotary viscous brake 50 is very compact. For example, the diameter of the cylindrically shaped rotary viscous brake 50 may be less then 10 cm, preferably about 7 cm. The hight of the shaped rotary viscous brake 50 may be less then 5 cm, preferably about 3 cm. Such a compact and small sized rotary viscous brake 50 may fit inside a hose reel 10 without changing the size of the hose reel 10, and additionally provide for an easy and reliable assemble of the rotary viscous brake 50.

One or more embodiments disclosed herein provides a rotary viscous brake for a hose reel 10 and a hose reel 10 with such a rotary viscous brake with a low damping torque when unwinding the hose from the hose reel 10, and a higher damping torque when winding the hose onto the hose reel 10. The rotary viscous brake 50 is suitable for a hose reel 10 to ensure that a retraction of the hose 70 is done in a controlled manner, not too fast, and without causing injuries to users, the hose 70, anything connected to the hose 70, and the hose reel 10. One or more embodiments disclosed herein achieves this without the use of any gears. This is advantageous, because gears need maintenance and have a limited lifetime. One or more embodiments disclosed herein allows that the rotary viscous brake may be arranged in direct contact with the rotating drum 30 of the hose reel 10 and the housing 20 of the house reel 10, such that no other parts, such as gears or couplings, are needed. This provides a reliable hose reel with a long lifetime.

At least one of the above embodiments provides one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any claimed embodiment disclosed herein may be technically combined with any other claimed embodiments disclosed herein.

### Brief Description of the Drawings

The accompanying drawings illustrate presently exemplary embodiments of the disclosure, and together with the general description given above and the detailed description of the embodiments given below, serve to explain, by way of example, the principles of the disclosure.
Fig 1 is a diagrammatic illustration of an exemplary embodiment of the present disclosure with a part cut open for better illustration;
Fig 2 is a diagrammatic illustration of a diagonal cut along an axial direction of the exemplary embodiment of Fig 1;
Fig 3 is a diagrammatic illustration of a part of the exemplary embodiment of Fig 1;
Fig 4 is a diagrammatic illustration of a part of the exemplary embodiment of Fig 1;
Fig 5 is a diagrammatic illustration of a diagonal cut along a radial direction of the exemplary embodiment of Fig 1;
Fig 6 is a diagrammatic illustration of a cut through a hose reel according to an exemplary embodiment of the present disclosure; and
Fig 7 is a diagrammatic illustration of section A in Fig 6 according to an exemplary embodiment of the present disclosure.

### Detailed Description

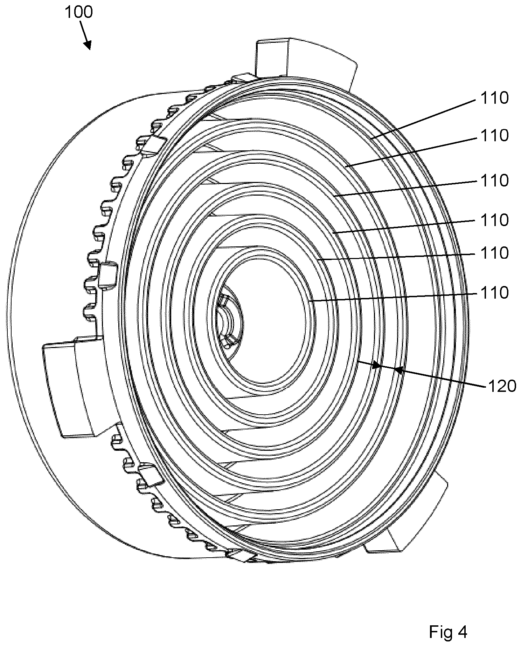

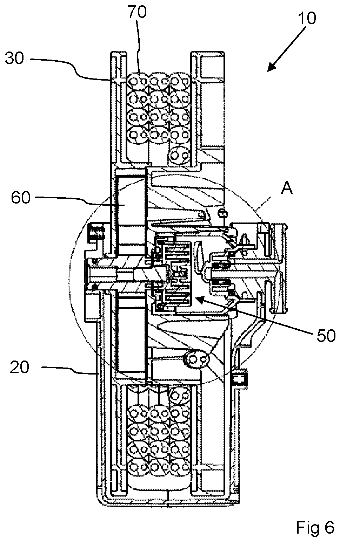

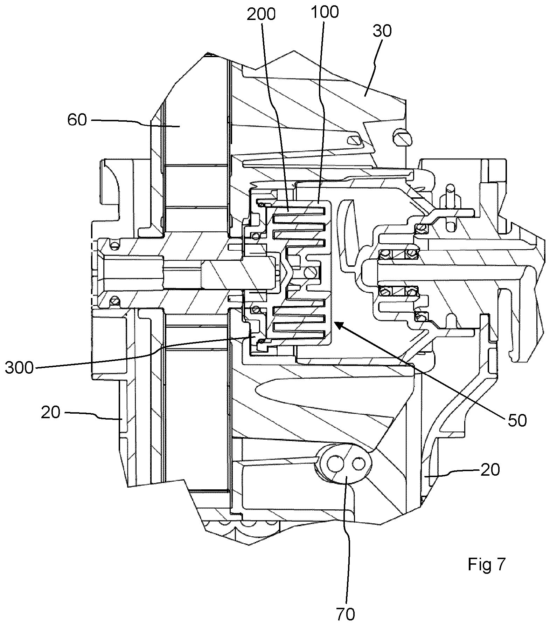

Figures 1 to 5 illustrate one and the same example of an embodiment of the rotary viscous brake 50, and figures 6 and 7 illustrate how an example of an embodiment of the rotary viscous brake 50 in an example of a hose reel 10. The rotary viscous brake 50 may be known as a rotary damper or a rotary fluid brake. At least one embodiment of the rotary viscous brake slows down, controls, the winding up of the hose 70 when the hose 70 is retracted onto the hose reel 10.

Turning to figure 1, an embodiment of the rotary viscous brake 50 is shown with a part cut out so that the interior with the second part 200 is also illustrated. The rotary viscous brake 50 is preferably cylindrical in shape because the first part 100 may be a housing, and the second part 200 may be a rotor rotating inside the first part 100. The third part 300 may be a lid enclosing the second part 200 with the liquid 400 between the first and third parts. The first part 100 may form a cylindrical bottom and a cylindrical surface, while the third part 300 may form a cylindrical top of the rotary viscous brake 50 shaped as a cylinder. The second part 200 may rotate inside immersed in the liquid 400. The diameter of the cylinder may be less than 10 centimetres, for example about 7 centimetres. The hight of the cylinder may be less than 5 centimetres, for example 3 centimetres.

The liquid 400 may be silicone oil. Preferably a mixture of two or three silicon oils with different viscosity, for example 5000 cst, 12500 cst, and 30000 cst may be used. Preferably the mixture of the silicone oils is inserted in a clean rotary viscous brake, without any foreign substances, and the silicone oils 400 are mixed during use of the rotary viscous brake 50.

The figures illustrate an embodiment of a rotary viscous brake 50 for a hose reel 10. The rotary viscous brake 50 comprises the first part 100 attachable to a housing 20 of the hose reel 10, the second part 200 attachable to a rotatable drum 30 for a hose on the hose reel 10, and the third part 300 for enclosing the second part 200 within the first part 100 and third part 300 together with the liquid 400. The first part 100 comprises a plurality of first fins 110 being circumferential and extending in an axial direction of the rotary viscous brake 50. The second part 200 comprises a plurality of second fins 210 being at least partly circumferential and extending in an opposite axial direction of the rotary viscous brake 50. The plurality of first fins 110 and second fins 210 being arranged such that they are interleaved with each other and immersed by the liquid 400 for providing a damping torque when the first part 100 and the second part 200 rotate relatively to each other.

As may be taken from the figures, there are at least two second fins 210 next to each circumferential first fin 110. The at least two second fins 210 next to each circumferential first fin 110 may be at least two second fins 210 on the same circumference of the second part 200. This is best illustrated in figures 3 to 5 where each first fin 110 is circumferential. The outer most first fin 110 may form the outer cylindrical wall of the first part 100. There may be two, three or four separate second fins 210 along one circumference, for example figure 5 illustrates two second fins 210, along each circumference with second fins, next to each circumferential first fin 110. Starting from the outside going inwards, figures 3 to 5 illustrate a first circumferential first fin 110 that also form the outer cylindrical wall of the first part 100. This is followed by two separate second fins 210 on a second circumference. Thereafter is a circumferential fin 110 on a third circumference illustrated, followed by two second fins 210 on a fourth circumference, a circumferential fin 110 on a fifth circumference, two second fins 210 on a sixth circumference, a circumferential fin 110 on a seventh circumference, a circumferential fin 110 on a eight circumference, two second fins 210 on a ninth circumference, a circumferential fin 110 on a tenth circumference, a circumferential fin 110 on an eleventh circumference, two second fins 210 on a twelfth circumference, and a circumferential fin 110 on a thirteens circumference. The last inner a circumferential fin 110 may be a cylinder orientated coaxially within the rotary viscous brake 50. More or less first and second fins may be used.PasswordMess7!

A thickness 220 of each of the second fins 210 is gradually increased from a thinner end 212 to a thicker end 214. As illustrated, the thickness 220 of each of the second fins 210 may be a gradual and constant increase from one thinner end 212 to the thicker other end 214. As best taken from figures 3 and 5, the increase is in the same rotational direction for all second fins 210. All the thinner end 212 may be leading when the second part 200 is rotating clockwise in figure 3, and the opposite in figure 5. All the second fins 210 may have correspondingly the same shape, except for their lengths along the circumference which is getting smaller the closer they are to the centre.

The embodiment of the rotary viscous brake 50 as illustrated is configured such that the damping torque is higher when second part 200 rotates leading with the thinner end 212, and the damping torque is lower when second part 200 rotates leading with the thicker end 214, the rotation being relative to the first part 100. For example, the rotary viscous brake 50 in figure 5 produces a low damping torque when the second fins 210 rotate clockwise, and a hight damping torque when the second fins 210 rotate counterclockwise. The difference in damping torque may be 20 to 30 percent. The damping torque increases when the rotational speed increases. Figures 6 and 7 illustrate the rotary viscous brake 50 inside a hose reel 10 providing a low damping torque when unwinding the hose 70 from the hose reel 10, and a higher damping torque when winding the hose 70 onto the hose reel 10.

As may be best taken from figures 3 and 5, the thinner end 212 may have a thickness 222 that is between 30 and 50 percent, preferably about 40 percent, of a thickness 224 of the thicker end 214. The thinner end 212 may increase gradually and constant from 40 percent of a thickness 224 of the thicker end 214 along the length of the second fin as illustrated best in figures 3 and 5. This may apply to all second fins 210. The increase from the thinner end 212 to the thicker end 214 may be only on one side of the second fins 210. As illustrated in figure 5 and viewed along the circumference, the radius to the inside of the second fins 210 is reduced from the thinner end 212 to the thicker end 214, while the radius to the outside of the second fins 210 is constant between the ends 212, 214.

As may be best taken from figures 3 and 5, there may be a 10 to 30 degrees, preferably 20 degrees, opening 230 between the at least two second fins 210 next to each circumferential first fin 110. In figures 3 and 5, on each circumference there are two second fins 210 with an opening 230 between each of those two second fins 210. Following a circumference, one second fin 210 may stretch for 160 degrees along the circumference, then there may be an opening 230 for 20 degrees, followed by one more second fin 210 stretching for 160 degrees, and thereafter a second opening 230 connecting to the first second fin 210. Together the two openings 230 and the two fins form 365 degrees along the same circumference. The opening 230 may be from the bottom, the end plate opposite the third part 300, of the second part 200 and all the way up, as illustrated in figure 3. The opening 230 may thus be smaller the closer one gets to the centre since the circumference gets shorter.

In the figures 1 to 5 there may be two sets of the second fins 210, each set being along a different circumference. The two sets being next to each other in a radial direction, comprise an off-set 240 of the thicker ends 214 of each set by 90 degrees. This is best illustrated in figure 5. Between two circumferential first fins 110 there is a set of second fins 210, figure 5 illustrating one set of two second fins 210 between each circumferential first fins 110. Between two sets of second fins 210 there is one circumferential first fin 110. Figure 5 illustrates that there is an off-set 240 of 90 degrees between two sets of second fins 210. This off-set 240 is in the circumferential direction. Every second set of second fins 210 may have the same relative position. The opening 230 between two second fins 210 may preferably be in the middle of next outer or inner second fin 210.

As may best be taken from figure 1 to 5, the thickness 224 of the thicker end 214 is 80 to 90 percent, preferably 85 percent, of the groove width 120 between the two first fins 110 in which the thicker end 214 rotates. The groove between two circumferential first fins 110, that is the groove in which the second fins rotate, has a width 120. The thickness 224 of the thicker end 214 of each second fin 210 is about 85 percent of that width 120. This may be constant in the radial direction, even closer to the centre.

Figures 1 to 5 illustrate that the plurality of first fins 110 and second fins 210 are interleaved with each other in a radial direction with two second fins 210 on each circumference interleaved between two circumferential first fins 110. Between two circumferential first fins 110 there are two, three or four second fins 210. Figures 1 to 5 illustrate a preferred embodiment with only two, no more and no less, second fins 210 between two circumferential first fins 110. In other embodiments there may be a plurality of first fins 110 and second fins 210 interleaved with each other in a radial direction with three or four second fins 210 on each circumference interleaved between two circumferential first fins 110.

Figures 1 to 5 illustrate an axial extension 216 of each second fin 210 at the thinner end 212 is less compared with an axial extension 218 of each second fin 210 at the thicker end 214. The axial extension is along the hight of the cylindrical rotary viscous brake 50.

According to one embodiment, an outer diameter of the rotary viscous brake 50 may be less than 10 centimetres, preferably less than 8 centimetres. The hight may be less than 3 centimetres. The first fins 110 may be between four and six, preferably five, in numbers, not counting the outer or inner wall of the first part 100.

According to one embodiment, the gradually increased from a thinner end 212 to a thicker end 214 on the second fins 210 may be formed by reducing a radius to the inside of the second fins 210 from the thinner end 212 to the thicker end 214, while keeping a radius to the outside of the second fins 210 constant between the thinner end 212 and the thicker end 214. The reduction of the radius may be gradually and constant. This is best illustrated in figure 5.

According to one embodiment, the third part 300 comprises an opening 310 arranged centrally to allow access to a central part of the second part 200. This allows access to the dampening torque given by rotation of the second part 200 immersed in the liquid 400 within the first and third parts 100, 300.

As illustrated in figures 1 and 2, the rotary viscous brake 50 may comprise one or more o-rings 320 between the first part 100 and the third part 300. This may be a static o-ring 320. The rotary viscous brake 50 may comprise one or more o-rings 330 between the second part 200 and the third part 300. This may be a dynamic o-ring 330. These o-rings 320, 330 may seal of the liquid 400 from the outside environment.

With regard to the figures, especially figures 6 and 7, a hose reel 10 comprising the rotary viscous brake 50 is illustrated. The hose reel 10 may comprise any one of the embodiments of the rotary viscous brake 50 described herein. The first part 100 is attached to the housing 20 of the hose reel 10, and the second part 200 is attached to the rotatable drum 30 for a hose 70 on the hose reel 10. The first part 100 may be at least a substantial part of the housing of the rotary viscous brake 50 and the second part 200 may be a rotor. The third part 300 may be the lid.

According to one embodiment, the rotary viscous brake 50 may be configured to rotate in both directions and providing different damping torque in the two directions. There may be no need for any gears or similar between any parts of the rotary viscous break 50 and any parts of the hose reel 10. The connections of the rotary viscous break 50 may be direct to the hose reel's parts. The hose reel 10 may comprise a spring 60 with a spring force constantly acting on the rotary viscous brake 50. There may be no further break, damping or gearing. The rotary viscous brake 50 may be the only brake for the rotatable drum 30. The hose reel 10 may further comprise a stop for the hose 70 of the hose reel 10. The stop may act directly and only on the hose 70, not on the rotatable drum 30.

Turning to figures 6 and 7, a hose reel 10 with the rotary viscous brake 50 is illustrated. The rotary viscous brake 50 is suitable for a hose reel 10 to ensure the retraction of the hose 70. The hose reel 10 has a housing 20 and inside the housing 20 is arranged a rotatable drum 30. The hose 70 may be winded onto and off the rotatable drum 30. Figure 7 is an enlargement of the encircled area A in figure 6. Figure 7 illustrate how the rotary viscous brake 50 may be arranged within the hose reel 10.

A spring 60 may acts between the housing 20 and the rotatable drum 30. The spring 60 may be a torsion spring 60. The hose 70 may be winded onto and off the rotatable drum 30. When the hose 70 is winded off the rotatable drum 30, for example by a user pulling out the hose 70 from the hose reel 10, the spring 60 is rotated and stores energy. At a desired hose length the user may apply a stop to prevent the hose 70 from being pulled back into the hose reel 10 by the stored energy in the spring 60. When the hose 70 is to be winded onto the rotatable drum 30, then the stored energy in the spring 60 rotates the rotatable drum 30 while the rotary viscous break 50 prevents the rotatable drum 30 rotating too fast. The retraction is done in a controlled manner and without causing injuries to users, the hose 70, and the hose reel 10. According to one embodiment, during the retraction the thinner end 212 hits the liquid 400 first, providing a larger break force, larger damping torque, compared with the break force, damping torque, produced when the hose 70 is pulled out by hand.

According to one embodiment, the rotary viscous break 50 may be connected directly to the rotatable drum 30 and the housing 20, that is without any gearing. The direct connection allows for a compact hose reel 10 and a reliable hose reel 10 with a long lifetime. The absence of gears is advantageous, because gears need maintenance and have a limited lifetime.

It will be apparent to those skilled in the art that various modifications and variations can be made to the rotary viscous brake, and the hose reel with the rotary viscous brake. Other embodiments will be apparent to those skilled in the art from consideration of the specification and practice of the disclosed embodiments. It is intended that the specification, embodiments, and examples be considered as examples only, with a true scope being indicated by the following claims and their equivalents.

## Claims

1. A rotary viscous brake for a hose reel (10),
the rotary viscous brake (50) comprising a first part (100) attachable to a housing (20) of the hose reel (10), a second part (200) attachable to a rotatable drum (30) for a hose on the hose reel (10), and a third part (300) for enclosing the second part (200) within the first part (100) and third part (300) together with a liquid (400);
the first part (100) comprising a plurality of first fins (110) being circumferential and extending in an axial direction of the rotary viscous brake (50);
the second part (200) comprising a plurality of second fins (210) being at least partly circumferential and extending in an opposite axial direction of the rotary viscous brake (50);
the plurality of first fins (110) and second fins (210) being arranged such that they are interleaved with each other and immersed by the liquid (400) for providing a damping torque when the first part (100) and the second part (200) rotate relatively to each other;
**characterised in that**
there are at least two second fins (210) next to each circumferential first fin (110); and
a thickness (220) of each of the second fins (210) is gradually increased from a thinner end (212) to a thicker end (214).

2. The rotary viscous brake according to claim 1, wherein the rotary viscous brake is configured such that the damping torque is higher when second part (200) rotates leading with the thinner end (212), and the damping torque is lower when second part (200) rotates leading with the thicker end (214), the rotation being relative to the first part (100).

3. The rotary viscous brake according to claim 1 or 2, wherein the thinner end (212) has a thickness (222) that is between 30 and 50 percent, preferably about 40 percent, of a thickness (224) of the thicker end (214).

4. The rotary viscous brake according to any one of the preceding claims, wherein there is a 10 to 30 degrees, preferably 20 degrees, opening (230) between the at least two second fins (210) next to each circumferential first fin (110).

5. The rotary viscous brake according to any one of the preceding claims, wherein two sets of the second fins (210), each set being along a different circumference, the two sets being next to each other in a radial direction, comprise an off-set (240) of the thicker ends (214) between each set by 90 degrees.

6. The rotary viscous brake according to any one of the preceding claims, wherein the thickness (224) of the thicker end (214) is 80 to 90 percent, preferably 85 percent, of the groove width (120) between the two first fins (110) in which the thicker end (214) rotates.

7. The rotary viscous brake according to any one of the preceding claims, wherein the plurality of first fins (110) and second fins (210) are interleaved with each other in a radial direction with two second fins (210) on each circumference interleaved between two circumferential first fins (110).

8. The rotary viscous brake according to any one of the preceding claims, wherein the plurality of first fins (110) and second fins (210) are interleaved with each other in a radial direction with three or four second fins (210) on each circumference interleaved between two circumferential first fins (110).

9. The rotary viscous brake according to any one of the preceding claims, wherein an axial extension (216) of each second fin (210) at the thinner end (212) is less compared with an axial extension (218) of each second fin (210) at the thicker end (214).

10. The rotary viscous brake according to any one of the preceding claims, wherein the gradually increased from a thinner end (212) to a thicker end (214) on the second fins (210) is formed by reducing a radius to the inside of the second fins (210) from the thinner end (212) to the thicker end (214), while keeping a radius to the outside of the second fins (210) constant between the thinner end (212) and the thicker end (214).

11. The rotary viscous brake according to any one of the preceding claims, wherein the third part (300) comprises an opening (310) arranged centrally to allow access to a central part of the second part (200).

12. A hose reel comprising the rotary viscous brake according to any one of the preceding claims, wherein the first part (100) is attached to the housing (20) of the hose reel (10), and the second part (200) is attached to the rotatable drum (30) for a hose (70) on the hose reel (10).

13. The hose reel according to claim 12, wherein the rotary viscous brake (50) is configured to rotate in both directions and providing different damping torque in the two directions.

14. The hose reel according to claim 12 or 13, wherein the hose reel comprises a spring (60) with a spring force constantly acting on the rotary viscous brake (50).

15. The hose reel according to claim 12 or 13, wherein the rotary viscous brake (50) is the only brake for the rotatable drum (30).
